# EUROPEAN PATENT APPLICATION

(11) **EP 4 819 668 A1**
(43) Date of publication of application: **07.10.2026**
(21) Application number: 24895795.3
(22) Date of filing: 20.08.2024
(51) Int. Cl.: H04W 24/02

(54) **COMMUNICATION SENSING METHOD AND APPARATUS, AND STORAGE MEDIUM**

(30) Priority: 28.11.2023 CN 202311609172
(71) Applicant: Datang Mobile Communications Equipment Co., Ltd., Beijing 100085 (CN)
(72) Inventor: CAI, Yu, Beijing 100085 (CN)
(74) Representative: Studio Torta S.p.A.
(86) International application number: PCT/CN2024/113493
(87) International publication number: WO 2025/112694

(57) **Abstract**

The present disclosure provides a communication and sensing method, an apparatus, and a storage medium, relating to the field of communication technologies. The method is applied to a first device and includes: transmitting a first sensing signal using a first transmission parameter on a first time-domain resource; acquiring a second transmission parameter, where the second transmission parameter is related to the first transmission parameter, and/or, the second transmission parameter is related to sensing data of a target object acquired based on the first sensing signal; transmitting a second sensing signal using the second transmission parameter on a second time-domain resource, where both the first sensing signal and the second sensing signal are used for sensing the target object. The method of the present disclosure can realize the adjustment of the second transmission parameter when sensing a moving target object, and further adjustment of the sensing signal.

## Description

The present disclosure claims priority to Chinese Patent Application No. 202311609172.4, filed to the China National Intellectual Property Administration on November 28, 2023, and entitled "COMMUNICATION AND SENSING METHOD, APPARATUS, AND STORAGE MEDIUM", which is hereby incorporated by reference in its entirety.

### TECHNICAL FIELD

The present disclosure relates to the field of communication technologies, and in particular, to a communication and sensing method, an apparatus, and a storage medium.

### BACKGROUND

Communication and sensing integration refers to a unified design of communication and sensing functions achieved through means such as joint design of air interface and protocol, time-frequency-space resource multiplexing, and hardware device sharing, so that a wireless network implements a sensing function while performing communication interaction, thereby improving the overall performance and service capability of the network.

Currently, communication and sensing can acquire feature information of the environment and/or objects within the environment through analysis of transmission, reflection, and scattering of wireless sensing signals, so as to track, monitor, and detect a sensed target object. However, if the target object is a moving object, the existing communication and sensing does not have a design for adjusting transmission parameters of a sensing signal transceiver during continuous sensing of the moving target.

Therefore, how to adjust the transmission parameters of the sensing signal transceiver during continuous sensing of the moving target is an urgent problem to be solved.

### SUMMARY

The present disclosure provides a communication and sensing method, an apparatus, and a storage medium, which solve the technical problems of low sensing performance and low accuracy of acquired sensing data in communication and sensing.

In a first aspect, an embodiment of the present disclosure provides a communication and sensing method, the method is applied to a first device, and the method includes:
transmitting a first sensing signal using a first transmission parameter on a first time-domain resource;
acquiring a second transmission parameter, where the second transmission parameter is related to the first transmission parameter, and/or, the second transmission parameter is related to sensing data of a target object acquired based on the first sensing signal;
transmitting a second sensing signal using the second transmission parameter on a second time-domain resource, where both the first sensing signal and the second sensing signal are used for sensing the target object.

Optionally, acquiring the second transmission parameter includes:
receiving indication information sent by a second device, where the indication information is used to indicate the second transmission parameter or the sensing data of the target object;
acquiring the second transmission parameter according to the indication information.

Optionally, the first transmission parameter includes: a first sending parameter and/or a first receiving parameter, the second transmission parameter includes: a second sending parameter and/or a second receiving parameter, and the indication information includes: first indication information and/or second indication information;
if the indication information is the first indication information, the first device is a sensing signal sending end, the second device is a sensing signal receiving end or a device other than the sensing signal sending end and the sensing signal receiving end, and the first indication information is used to determine the second sending parameter;
if the indication information is the second indication information, the first device is a sensing signal receiving end, the second device is a sensing signal sending end or a device other than the sensing signal sending end and the sensing signal receiving end, and the second indication information is used to determine the second receiving parameter.

Optionally, receiving the indication information sent by the second device includes:
receiving the first indication information sent by the second device on a third time-domain resource, where a start time of the third time-domain resource is equal to or later than an end time of the first time-domain resource, an end time of the third time-domain resource is earlier than or equal to a time obtained by subtracting T1 from a start time of the second time-domain resource, and T1 is greater than or equal to 0;
and/or, receiving the second indication information sent by the second device on a fourth time-domain resource, where a start time of the fourth time-domain resource is equal to or later than the end time of the first time-domain resource, an end time of the fourth time-domain resource is earlier than or equal to a time obtained by subtracting T2 from the start time of the second time-domain resource, and T2 is greater than or equal to 0.

Optionally, the method further includes:
if the first indication information is not received on the third time-domain resource, the second sending parameter is the same as the first sending parameter;
   and/or,
if the second indication information is not received on the fourth time-domain resource, the second receiving parameter is the same as the first receiving parameter.

Optionally, before receiving the indication information sent by the second device, the method further includes:
acquiring the sensing data of the target object according to the first sensing signal;
sending the sensing data to the second device.

Optionally, sending the sensing data to the second device includes:
sending the sensing data to the second device upon determining that the sensing data of the target object changes.

In a second aspect, an embodiment of the present disclosure provides a communication and sensing method, the method is applied to a second device, and the method includes:
acquiring first sensing data of a target object;
generating indication information according to the first sensing data of the target object, where the indication information is used to indicate a second transmission parameter or second sensing data of the target object, the second transmission parameter is used by a first device to transmit a second sensing signal on a second time-domain resource, and the second sensing signal is used for sensing the target object;
sending the indication information to the first device.

Optionally, a first transmission parameter includes: a first sending parameter and/or a first receiving parameter, the second transmission parameter includes: a second sending parameter and/or a second receiving parameter, and the indication information includes: first indication information and/or second indication information;
if the indication information is the first indication information, the first device is a sensing signal sending end, the second device is a sensing signal receiving end or a device other than the sensing signal sending end and the sensing signal receiving end, and the first indication information is used to determine the second sending parameter;
if the indication information is the second indication information, the first device is a sensing signal receiving end, the second device is a sensing signal sending end or a device other than the sensing signal sending end and the sensing signal receiving end, and the second indication information is used to determine the second receiving parameter.

Optionally, if the second device is the device other than the sensing signal sending end and the sensing signal receiving end, acquiring the first sensing data of the target object includes:
receiving the first sensing data of the target object sent by the sensing signal receiving end.

Optionally, sending the indication information to the first device includes:
sending the indication information to the first device upon determining that the second sensing data of the target object or a change in the second sensing data of the target object is greater than or equal to a first threshold, or a change in the second transmission parameter is greater than or equal to a second threshold.

Optionally, the first sensing data of the target object is acquired based on a first sensing signal transmitted using a first transmission parameter on a first time-domain resource, the first sensing signal is used for sensing the target object; the first transmission parameter includes: a first sending parameter and/or a first receiving parameter.

In a third aspect, an embodiment of the present disclosure provides a communication and sensing apparatus, the apparatus is applied to a first device, and the apparatus includes:
a first transmission unit, configured to transmit a first sensing signal using a first transmission parameter on a first time-domain resource;
an acquisition unit, configured to acquire a second transmission parameter, where the second transmission parameter is related to the first transmission parameter, and/or, the second transmission parameter is related to sensing data of a target object acquired based on the first sensing signal;
a second transmission unit, configured to transmit a second sensing signal using the second transmission parameter on a second time-domain resource, where both the first sensing signal and the second sensing signal are used for sensing the target object.

In a fourth aspect, an embodiment of the present disclosure provides a communication and sensing apparatus, the apparatus is applied to a second device, and the apparatus includes:
an acquisition unit, configured to acquire first sensing data of a target object;
a processing unit, configured to generate indication information according to the first sensing data of the target object, where the indication information is used to indicate a second transmission parameter or second sensing data of the target object, the second transmission parameter is used by a first device to transmit a second sensing signal on a second time-domain resource, and the second sensing signal is used for sensing the target object;
a sending unit, configured to send the indication information to the first device.

In a fifth aspect, an embodiment of the present disclosure provides a communication and sensing apparatus, the apparatus is applied to a first device, and the apparatus includes a memory, a transceiver, and a processor:
the memory is configured to store a computer program; the transceiver is configured to transceive data under control of the processor; the processor is configured to read the computer program in the memory and perform the following operations:
transmitting a first sensing signal using a first transmission parameter on a first time-domain resource;
acquiring a second transmission parameter, where the second transmission parameter is related to the first transmission parameter, and/or, the second transmission parameter is related to sensing data of a target object acquired based on the first sensing signal;
transmitting a second sensing signal using the second transmission parameter on a second time-domain resource, where both the first sensing signal and the second sensing signal are used for sensing the target object.

Optionally, acquiring the second transmission parameter includes:
receiving indication information sent by a second device, where the indication information is used to indicate the second transmission parameter or the sensing data of the target object;
acquiring the second transmission parameter according to the indication information.

Optionally, the first transmission parameter includes: a first sending parameter and/or a first receiving parameter, the second transmission parameter includes: a second sending parameter and/or a second receiving parameter, and the indication information includes: first indication information and/or second indication information;
if the indication information is the first indication information, the first device is a sensing signal sending end, the second device is a sensing signal receiving end or a device other than the sensing signal sending end and the sensing signal receiving end, and the first indication information is used to determine the second sending parameter;
if the indication information is the second indication information, the first device is a sensing signal receiving end, the second device is a sensing signal sending end or a device other than the sensing signal sending end and the sensing signal receiving end, and the second indication information is used to determine the second receiving parameter.

Optionally, receiving the indication information sent by the second device includes:
receiving the first indication information sent by the second device on a third time-domain resource, where a start time of the third time-domain resource is equal to or later than an end time of the first time-domain resource, an end time of the third time-domain resource is earlier than or equal to a time obtained by subtracting T1 from a start time of the second time-domain resource, and T1 is greater than or equal to 0;
and/or, receiving the second indication information sent by the second device on a fourth time-domain resource, where a start time of the fourth time-domain resource is equal to or later than the end time of the first time-domain resource, an end time of the fourth time-domain resource is earlier than or equal to a time obtained by subtracting T2 from the start time of the second time-domain resource, and T2 is greater than or equal to 0.

Optionally, the processor is further configured to perform the following operations:
if the first indication information is not received on the third time-domain resource, the second sending parameter is the same as the first sending parameter;
   and/or,
if the second indication information is not received on the fourth time-domain resource, the second receiving parameter is the same as the first receiving parameter.

Optionally, before receiving the indication information sent by the second device, the processor is further configured to perform the following operations:
acquiring the sensing data of the target object according to the first sensing signal;
sending the sensing data to the second device.

Optionally, sending the sensing data to the second device includes:
sending the sensing data to the second device upon determining that the sensing data of the target object changes.

In a sixth aspect, an embodiment of the present disclosure provides a communication and sensing apparatus, the apparatus is applied to a second device, and the apparatus includes a memory, a transceiver, and a processor:
the memory is configured to store a computer program; the transceiver is configured to transceive data under control of the processor; the processor is configured to read the computer program in the memory and perform the following operations:
acquiring first sensing data of a target object;
generating indication information according to the first sensing data of the target object, where the indication information is used to indicate a second transmission parameter or second sensing data of the target object, the second transmission parameter is used by a first device to transmit a second sensing signal on a second time-domain resource, and the second sensing signal is used for sensing the target object;
sending the indication information to the first device.

In a seventh aspect, an embodiment of the present disclosure provides a non-transitory readable storage medium, where the non-transitory readable storage medium stores a computer program, and the computer program is used to cause a processor to execute the method according to any one of the first aspect, or, to execute the method according to any one of the second aspect.

In an eighth aspect, an embodiment of the present disclosure provides a communication and sensing method, the method is applied to a first device, and the method includes:
transmitting a first sensing signal using a first transmission parameter on a first time-domain resource;
receiving indication information sent by a second device, where the indication information is used to indicate a second transmission parameter or sensing data of a target object;
acquiring the second transmission parameter according to the indication information;
transmitting a second sensing signal using the second transmission parameter on a second time-domain resource, where both the first sensing signal and the second sensing signal are used for sensing the target object.

Optionally, receiving the indication information sent by the second device includes:
receiving first indication information sent by the second device on a third time-domain resource, where a start time of the third time-domain resource is equal to or later than an end time of the first time-domain resource, an end time of the third time-domain resource is earlier than or equal to a time obtained by subtracting T1 from a start time of the second time-domain resource, and T1 is greater than or equal to 0;
and/or, receiving second indication information sent by the second device on a fourth time-domain resource, where a start time of the fourth time-domain resource is equal to or later than the end time of the first time-domain resource, an end time of the fourth time-domain resource is earlier than or equal to a time obtained by subtracting T2 from the start time of the second time-domain resource, and T2 is greater than or equal to 0.

Optionally, the second transmission parameter is the first transmission parameter, or, the second transmission parameter is determined according to the first transmission parameter, or, the second transmission parameter is determined according to the sensing data of the target object.

Optionally, determining the second transmission parameter according to the indication information includes:
determining the second transmission parameter according to the indication information and the second time-domain resource.

Optionally, determining the second transmission parameter according to the indication information includes:
determining the second transmission parameter according to the indication information and the first transmission parameter.

Optionally, determining the second transmission parameter according to the indication information includes:
determining the second transmission parameter according to the indication information, the second time-domain resource, and the first transmission parameter.

Optionally, the second transmission parameter or the sensing data of the target object is acquired according to the first sensing signal.

In a ninth aspect, an embodiment of the present disclosure provides a communication and sensing apparatus, the apparatus is applied to a first device, and the apparatus includes a memory, a transceiver, and a processor:
the memory is configured to store a computer program; the transceiver is configured to transceive data under control of the processor; the processor is configured to read the computer program in the memory and perform the following operations:
transmitting a first sensing signal using a first transmission parameter on a first time-domain resource;
receiving indication information sent by a second device, where the indication information is used to indicate a second transmission parameter or sensing data of a target object;
acquiring the second transmission parameter according to the indication information;
transmitting a second sensing signal using the second transmission parameter on a second time-domain resource, where both the first sensing signal and the second sensing signal are used for sensing the target object.

Optionally, the processor is specifically configured to:
receive first indication information sent by the second device on a third time-domain resource, where a start time of the third time-domain resource is equal to or later than an end time of the first time-domain resource, an end time of the third time-domain resource is earlier than or equal to a time obtained by subtracting T1 from a start time of the second time-domain resource, and T1 is greater than or equal to 0;
and/or, receive second indication information sent by the second device on a fourth time-domain resource, where a start time of the fourth time-domain resource is equal to or later than the end time of the first time-domain resource, an end time of the fourth time-domain resource is earlier than or equal to a time obtained by subtracting T2 from the start time of the second time-domain resource, and T2 is greater than or equal to 0.

Optionally, the second transmission parameter is the first transmission parameter, or, the second transmission parameter is determined according to the first transmission parameter, or, the second transmission parameter is determined according to the sensing data of the target object.

Optionally, the processor is specifically configured to:
determine the second transmission parameter according to the indication information and the second time-domain resource.

Optionally, the processor is specifically configured to:
determine the second transmission parameter according to the indication information and the first transmission parameter.

Optionally, the processor is specifically configured to:
determine the second transmission parameter according to the indication information, the second time-domain resource, and the first transmission parameter.

Optionally, the second transmission parameter or the sensing data of the target object is acquired according to the first sensing signal.

The present disclosure provides a communication and sensing method, an apparatus, and a storage medium. After the first device transmits the first sensing signal using the first transmission parameter on the first time-domain resource to sense the target object, the second transmission parameter that is related to the first transmission parameter and/or related to the sensing data of the target object acquired based on the first sensing signal is acquired, so as to adjust the second transmission parameter used by the first device to transmit the second sensing signal on the second time-domain resource, thereby realizing the adjustment of the second transmission parameter when sensing a moving target object, and further adjustment of the sensing signal.

It should be understood that the contents described in this SUMMARY section are not intended to limit essential or important features of the embodiments of the present invention, nor is it intended to limit the scope of the present invention. Other features of the present invention will be readily understood from the following description.

### BRIEF DESCRIPTION OF DRAWINGS

In order to illustrate technical solutions of the present disclosure or in the prior art more clearly, the drawings required to be used in the description of embodiments or the prior art will be introduced briefly in the following. Apparently, the drawings in the following description are some embodiments of the present disclosure. For persons of ordinary skill in the art, other drawings may also be obtained according to these drawings without creative efforts.
FIG. 1 is a schematic diagram of a scenario of a communication and sensing method provided by an embodiment of the present disclosure.
FIG. 2 is a schematic flowchart of a communication and sensing method provided by an embodiment of the present disclosure.
FIG. 3 is a schematic flowchart of another communication and sensing method provided by an embodiment of the present disclosure.
FIG. 4 is a schematic flowchart of yet another communication and sensing method provided by an embodiment of the present disclosure.
FIG. 5 is a schematic flowchart of yet another communication and sensing method provided by an embodiment of the present disclosure.
FIG. 6 is a schematic flowchart of still another communication and sensing method provided by an embodiment of the present disclosure.
FIG. 7 is a schematic flowchart of still another communication and sensing method provided by an embodiment of the present disclosure.
FIG. 8 is a schematic structural diagram of a communication and sensing apparatus provided by an embodiment of the present disclosure.
FIG. 9 is a schematic structural diagram of another communication and sensing apparatus provided by an embodiment of the present disclosure.
FIG. 10 is a schematic structural diagram of yet another communication and sensing apparatus provided by an embodiment of the present disclosure.
FIG. 11 is a schematic structural diagram of still another communication and sensing apparatus provided by an embodiment of the present disclosure.

### DESCRIPTION OF EMBODIMENTS

The term "and/or" in the embodiments of the present invention describes an association relationship of associated objects, indicating that there may be three types of relationships. For example, A and/or B may represent three situations: A exists alone, A and B exist at the same time, and B exists alone. The character "/" generally indicates that the associated objects before and after the character are of an "or" relationship.

In the embodiments of the present disclosure, the term "multiple" refers to two or more, and other quantifiers are similar.

In the embodiments of the present disclosure, the terms "first", "second", etc., are used only for illustration and distinguishing the described objects, without indicating any order, do not represent a particular limitation on the number of objects in the embodiments of the present disclosure, and shall not constitute any restriction on the embodiments of the present disclosure. For example, a first device is a device whose second transmission parameter is adjusted according to sensing data, and a second device is a source device from which the first device acquires the second transmission parameter. Descriptions such as "first" and "second" are only used to distinguish different devices, rather than indicating differences in priority or importance of the two devices.

The technical solutions in the embodiments of the present disclosure will be described clearly and completely below in conjunction with the accompanying drawings in the embodiments of the present disclosure. Apparently, the described embodiments are merely some embodiments of the present disclosure, rather than all embodiments. Based on the embodiments of the present disclosure, all other embodiments obtained by those of ordinary skill in the art without creative efforts shall fall within the protection scope of the present disclosure.

Communication and sensing integration may be abbreviated as communication-sensing integration, or may also be referred as integrated sensing and communication, abbreviated as ISAC.

The implementations of communication-sensing integration involved in the present disclosure are mainly based on introducing a sensing function (sensing function, SF) into a wireless communication network that supports communication-sensing integration. The sensing function may be an independent network function, or may be integrated with other network functions (for example, location management function (Location Management Function, LMF), access and mobility management function (Access and Mobility Management Function, AMF)) into one network function. The wireless communication network may be any communication network capable of introducing the sensing function, such as a wireless sensor network (Wireless Sensor Network, WSN), a mobile Ad hoc network (Mobile Ad hoc Network), a vehicular network (Vehicular Network), an Internet of things (Internet of Things), a 5G communication system (5G system for short), a future communication system, or a system integrating multiple communication systems, which is not limited in the embodiments of the present disclosure. The communication system may also include a core network part, such as a core network of a communication system like an evolved packet system (Evloved Packet System, EPS), a 5G system (5GS). The sensing function may implement at least one sensing-related function among sensing control, sensing data processing, and sensing authorization. Devices such as a base station and a user equipment (user equipment, UE) in the wireless network need to send and/or receive wireless sensing signals, so as to sense a target object to be sensed. The base station or the UE can obtain sensing data of the target object based on the reception of the wireless signals.

As a part of the communication network, the wireless sensing function provides the possibility of enhancing the use of telecommunications infrastructure in fields such as object detection and tracking, environmental monitoring, and human motion monitoring. Communication-sensing integration provides input for various vertical domains (such as unmanned aerial vehicles, smart homes, vehicular networks, factories, etc.). For example, it may be used for detecting objects and intruders in predefined security areas around smart homes, highways, railways, factories, critical infrastructures, etc., or for obstacle avoidance and trajectory tracking, automatic maneuvering and navigation for unmanned aerial vehicles, vehicles, and other autonomous guided vehicles, or for public safety search and rescue, rainfall monitoring and flood, health and motion monitoring, etc.

At present, when acquiring state information of an object to be sensed through a sensing signal, the existing sensing methods mainly sense through a fixed sensing signal. In this manner, if the object to be sensed is a moving object, the sensing signal may fail to cover or align with the object to be sensed, resulting in problems such as inability to accurately obtain the state information of the object to be sensed and low sensing performance.

In view of this, the embodiments of the present disclosure provide a communication and sensing method. When sensing a target object, according to collected sensing data of the target object, and/or, a sensing signal transmission parameter used when collecting the sensing data, a transmission parameter for transmitting the sensing signal on a next time-domain resource is adjusted, so that the transmission parameter (for example, beam direction) of the sensing signal can correspond to the moving target object, thereby improving the sensing performance of the communication and sensing service.

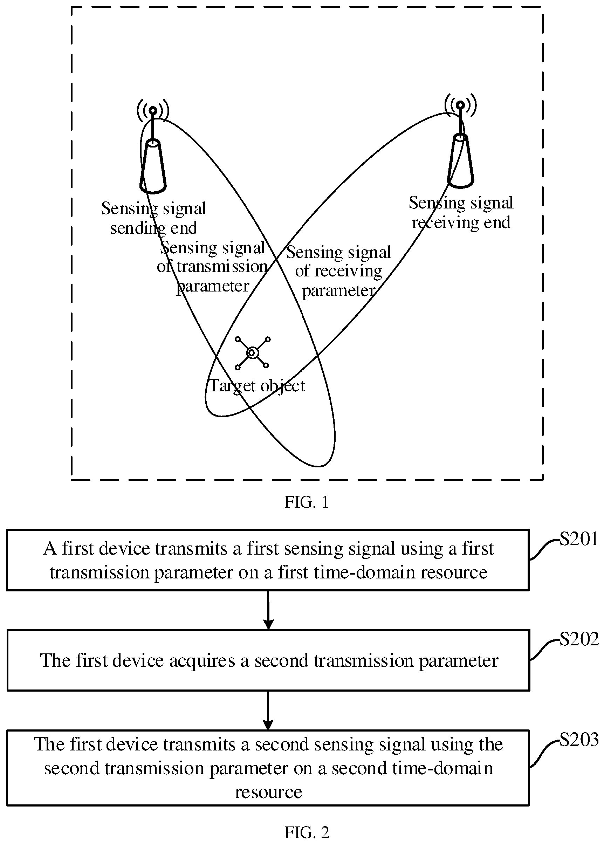

In the following, a scenario of a communication and sensing method provided by the present disclosure is introduced. FIG. 1 is a schematic diagram of a scenario of a communication and sensing method provided by an embodiment of the present disclosure. As shown in FIG. 1, the scenario may include: a sensing signal sending end, a sensing signal receiving end, and a target object.

The sensing signal sending end and the sensing signal receiving end may respectively be devices in a wireless network capable of sending and receiving sensing signals, such as base stations, UEs, etc., as long as they can transmit sensing signals. A sensing signal refers to a wireless signal used for sensing. The sensing signal may be a wireless signal dedicated to sensing, or may be a wireless signal used for both sensing and communication. The target object may be any object whose sensing data can be detected by the sensing signal, such as a vehicle, a living creature, an unmanned aerial vehicle, etc.

The sensing signal sending end is configured to send a sensing signal, and the sensing signal receiving end is configured to receive the sensing signal. The sensing signal is configured to sense the target object to obtain sensing data of the target object. By receiving the sensing signal, the influence of the target object on the reflection, scattering and the like of the sensing signal is obtained by analyzing, thereby acquiring the sensing data of the target object. A historical motion trajectory of the target object may be obtained through state information of the target object represented by the sensing data. For example, the historical motion trajectory of the target object may include a historical position, velocity, direction, etc., of the target object.

The function of acquiring the state information of the target object according to the sensing data may be provided by the sensing signal receiving end, or, after the sensing signal receiving end sends the sensing data to another device with a data processing capability, said another device processes sensing information to obtain the state information of the target object. After acquiring the state information of the target object, functions such as detection, monitoring, and tracking of the target object as mentioned above may be implemented based on the state information.

Currently, communication and sensing may be divided into monostatic sensing and bistatic sensing.

Monostatic sensing means that the sensing signal sending end and the sensing signal receiving end are spatially the same, that is, the sensing signal sending end and the sensing signal receiving end may be deployed in the same hardware entity, or, the sensing signal sending end and the sensing signal receiving end are one hardware entity, and the hardware entity may provide functions of sending sensing signals and receiving sensing signals.

Bistatic sensing means that the sensing signal sending end and the sensing signal receiving end are spatially separated. That is, the sensing signal sending end and the sensing signal receiving end may be deployed in different hardware entities, and data interaction is performed through a communication connection between the two hardware entities (namely, the sensing signal sending end and the sensing signal receiving end) to achieve the function of transmitting sensing signals.

Based on the scenario shown in FIG. 1, the technical solutions of the present disclosure and how the technical solutions of the present disclosure solve the above technical problems will be described in detail through specific embodiments. The following specific embodiments may be combined with each other, and the same or similar concepts or processes may not be repeated in some embodiments. The embodiments of the present disclosure will be described below with reference to the accompanying drawings.

FIG. 2 is a schematic flowchart of a communication and sensing method provided by an embodiment of the present disclosure. As shown in FIG. 2, the method includes the following steps.

S201: a first device transmits a first sensing signal using a first transmission parameter on a first time-domain resource.

The first device may be the sensing signal sending end and/or the sensing signal receiving end as mentioned in FIG. 1, and the first device may be, for example, a base station, a UE, or other devices. The first transmission parameter may include a sending parameter and/or a receiving parameter. The sending parameter is used by the sensing signal sending end to send the first sensing signal on the first time-domain resource, and the receiving parameter is used by the sensing signal receiving end to receive the first sensing signal on the first time-domain resource. The first sensing signal is used to sense a target object to obtain sensing data of the target object. The method of sensing the target object through the first sensing signal to obtain the sensing data of the target object is the same as the method described in FIG. 1, and will not be repeated here. Through the sensing data, state information of the target object may be obtained, such as a historical motion trajectory, a shape of the target object and so on. The historical motion trajectory of the target object may include, for example, a historical position, velocity, direction, and the like of the target object.

When the first device is the sensing signal sending end, it sends the first sensing signal on the first time-domain resource using a first sending parameter, and the first sending parameter is the aforementioned sending parameter included in the first transmission parameter. Correspondingly, the sensing signal receiving end receives the first sensing signal on the first time-domain resource using a first receiving parameter, and the first receiving parameter is the aforementioned receiving parameter included in the first transmission parameter. When the first device is the sensing signal receiving end, it receives the first sensing signal on the first time-domain resource using the first receiving parameter, and correspondingly, the sensing signal sending end sends the first sensing signal on the first time-domain resource using the first sending parameter.

In various embodiments of the present disclosure, the transmission parameter is used to control a beam, power and the like used for transmitting the sensing signal. The transmission parameter may include, for example, at least one of a beam parameter or a power parameter for transmitting the sensing signal. The beam parameter may include at least one of a beam direction or a beam width. By adjusting the transmission parameter, the beam, power and the like used for transmitting the sensing signal can be adjusted. Here, the first transmission parameter is used to control the beam, power and the like used for transmitting the first sensing signal. By adjusting the first transmission parameter, the beam, power and the like used for transmitting the first sensing signal can be adjusted.

The first sensing signal is the sensing signal described in FIG. 1.

Regarding the first time-domain resource, the present disclosure does not limit how to determine the first time-domain resource. For example, the first time-domain resource may be determined by the first device itself according to actual requirements, or may be determined according to a resource indication from other devices, or according to received resource configuration. The first time-domain resource may be any time-domain resource in periodic time-domain resources, or may be an aperiodic time-domain resource. The time-domain resource may include at least one time unit for transmitting the sensing signal, and the time unit may be a frame, a time slot, a subframe, an orthogonal frequency division multiplexing (Orthogonal Frequency Division Multiplexing, OFDM) symbol, and the like.

S202: the first device acquires a second transmission parameter.

The second transmission parameter is a transmission parameter used by the first device to transmit a second sensing signal on a second time-domain resource. A start time of the second time-domain resource is later than an end time of the first time-domain resource. The present disclosure does not limit how to determine the second time-domain resource. For example, the second time-domain resource may be determined by the first device itself according to actual requirements, or may be determined according to a resource indication from other devices, or according to received resource configuration. The second time-domain resource may be any time-domain resource in periodic time-domain resources, or may be an aperiodic time-domain resource.

In a possible implementation, the first device acquires the second transmission parameter by receiving indication information sent by a second device. The second device may be a device that transmits the sensing signal with the first device (for example, if the first device is the sensing signal sending end, the second device is the sensing signal receiving end; or, if the first device is the sensing signal receiving end, the second device is the sensing signal sending end), or may be a device other than the sensing signal sending end and the sensing signal receiving end (referred to as another device in subsequent embodiments), such as a device where a sensing control end is located. The other device may generate the indication information according to the sensing data of the target object, and the first device determines the second transmission parameter according to the indication information.

In another possible implementation, the second transmission parameter is determined by the first device based on the first transmission parameter. For example, the second transmission parameter may be the same as the first transmission parameter.

In another possible implementation, the second transmission parameter is determined by the first device according to the sensing data of the target object acquired based on the first sensing signal.

The second transmission parameter is related to the first transmission parameter, and/or, the second transmission parameter is related to the sensing data of the target object acquired based on the first sensing signal. For example, there may be a mapping relationship between the second transmission parameter and the first transmission parameter; or, the second transmission parameter is obtained by calculating according to the first transmission parameter; or, there may be a mapping relationship between the second transmission parameter and the sensing data, or, the second transmission parameter is obtained by calculating according to the sensing data; or, there may be mapping relationships between the second transmission parameter and the first transmission parameter, and between the second transmission parameter and the sensing data; or, the second transmission parameter is obtained by calculating according to the first transmission parameter and the sensing data, etc.

In various embodiments of the present disclosure, the sensing data of the target object may include, for example, at least one of a velocity, a distance, a direction, a position, a related sensing measurement quantity, a velocity offset, a distance offset, a direction offset, a sensing measurement quantity offset, a velocity range, a distance range, or a direction range of the target object. The sensing measurement quantity is, for example, one or more of a time delay, a Doppler frequency shift, an angle of arrival, a sensing signal receiving strength, or channel state information.

S203: the first device transmits the second sensing signal using the second transmission parameter on the second time-domain resource.

The second sensing signal is also used to sense the target object.

In the method provided by the embodiments of the present disclosure, after the first device transmits the first sensing signal using the first transmission parameter on the first time-domain resource to sense the target object, the second transmission parameter that is related to the first transmission parameter and/or related to the sensing data of the target object acquired based on the first sensing signal is acquired, so as to adjust the second transmission parameter used by the first device on the second time-domain resource to transmit the second sensing signal, thereby realizing the adjustment of the second transmission parameter when sensing a moving target object, and enabling better sensing of the target object.

In the following, the communication and sensing method is described in detail by taking as an example that the first device acquires the second transmission parameter by receiving the indication information sent by the second device in step S202.

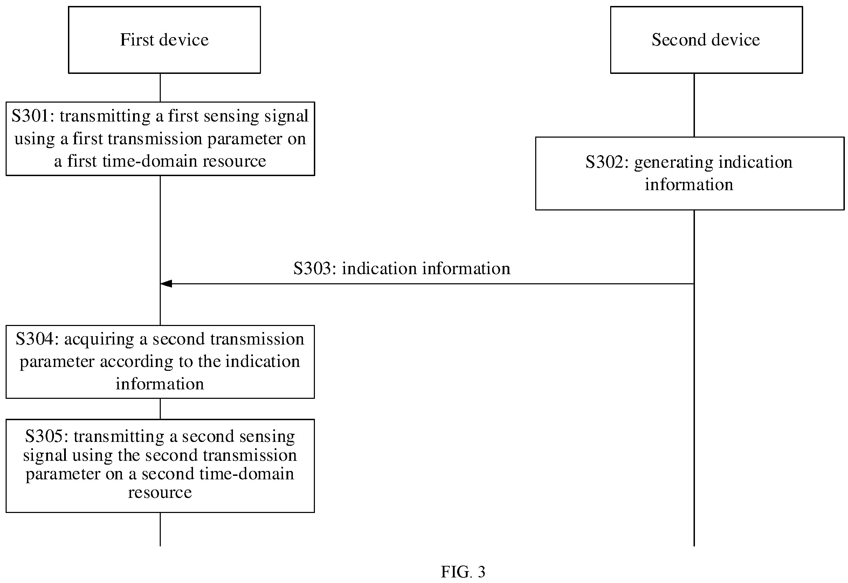

FIG. 3 is a schematic flowchart of another communication and sensing method provided by an embodiment of the present disclosure. As shown in FIG. 3, the method may include the following steps.

S301: a first device transmits a first sensing signal using a first transmission parameter on a first time-domain resource.

The first device may be a sensing signal sending end or a sensing signal receiving end.

S302: a second device generates indication information.

The indication information is used to indicate a second transmission parameter, second sensing data of a target object, a transmission parameter offset for determining the second transmission parameter, or a transmission parameter range for determining the second transmission parameter. The second sensing data is, for example, predicted sensing data corresponding to the target object on the second time-domain resource.

The indication information used to indicate the second transmission parameter includes, for example, the second transmission parameter or an identifier/index indicating the second transmission parameter.

The transmission parameter offset is, for example, a beam direction offset, a beam width offset, or a power offset.

The transmission parameter range is, for example, a beam direction range, a beam width range, or a power range.

The indication information used to indicate the second sensing data of the target object may include, for example, the second sensing data of the target object or an identifier/index indicating the second sensing data of the target object.

The second device may acquire first sensing data of the target object and generate the indication information according to the first sensing data. The first sensing data of the target object may be determined according to the first sensing signal transmitted on the first time-domain resource.

In a possible implementation, the second transmission parameter, the second sensing data of the target object, the transmission parameter offset for determining the second transmission parameter, or the transmission parameter range for determining the second transmission parameter indicated by the indication information may be determined according to the first sensing data of the target object. The second sensing data of the target object is different from the first sensing data of the target object. For example, the first sensing data of the target object is a sensing measurement quantity or a sensing measurement quantity offset related to the target object, and the second sensing data of the target object is one or more of a velocity, a distance, a direction, a position, a velocity offset, a distance offset, a direction offset, a velocity range, a distance range, or a direction range of the target object. The second sensing data of the target object may be determined according to the first sensing data of the target object. For another example, the first sensing data of the target object is a position of the target object, the second transmission parameter includes a second transmission beam direction, and the second transmission beam direction is determined to be a direction that can align with the position of the target object. For another example, the first sensing data of the target object is a direction range of the target object, a transmission parameter range for determining the second transmission parameter includes a transmission beam direction range for determining the second transmission beam direction, and the transmission beam direction range is determined to be a direction range that can align with the direction range of the target object.

In another possible implementation, the second sensing data of the target object indicated by the indication information is the first sensing data of the target object.

If the first device is a sensing signal sending end, the second device may be a sensing signal receiving end or another device. When the second device is the sensing signal receiving end, the second device receives the first sensing signal according to a first receiving parameter, acquires the first sensing data of the target object according to the first sensing signal, and generates the indication information according to the first sensing data. When the second device is the other device, the second device receives the first sensing data of the target object sent by the sensing signal receiving end, and generates the indication information according to the first sensing data. The first sensing data of the target object may be acquired by the sensing signal receiving end based on the first sensing signal.

If the first device is a sensing signal receiving end, the second device may be a sensing signal sending end or another device. When the second device is the sensing signal sending end, the second device acquires the first sensing data of the target object from the first device (the sensing signal receiving end), and generates the indication information according to the first sensing data. When the second device is the other device, the other device acquires the first sensing data of the target object from the sensing signal receiving end, and generates the indication information according to the first sensing data. The first sensing data of the target object may be acquired by the sensing signal receiving end based on the first sensing signal.

Optionally, if the second device determines that the first sensing data of the target object satisfies a criterion or that a change in the first sensing data of the target object satisfies a criterion, the second device generates the indication information. Otherwise, the second device does not generate the indication information.

S303: the second device sends the indication information to the first device.

Correspondingly, the first device receives the indication information sent by the second device.

Optionally, the second device sends the indication information to the first device if the second device determines that one of the following is satisfied:
the second sensing data of the target object satisfies a criterion; for example, the second sensing data of the target object is greater than or equal to a first threshold;
a change in the second sensing data of the target object satisfies a criterion; for example, the change in the second sensing data of the target object is greater than or equal to the first threshold;
a change in the second transmission parameter satisfies a criterion; for example, the change in the second transmission parameter is greater than or equal to a second threshold;
the transmission parameter offset for determining the second transmission parameter satisfies a criterion; for example, the transmission parameter offset for determining the second transmission parameter is greater than or equal to a third threshold;
a change in the transmission parameter range for determining the second transmission parameter satisfies a criterion; for example, the change in the transmission parameter range for determining the second transmission parameter is greater than or equal to a fourth threshold.

Conversely, if the second device determines that none of the above conditions is satisfied, the second device may not send the indication information to the first device.

Optionally, the second device may generate the indication information and send the indication information upon determining that one of the above conditions is satisfied. The second device may not generate the indication information upon determining that none of the above conditions is satisfied.

Optionally, the second device sends the indication information on a third time-domain resource. A start time of the third time-domain resource is equal to or later than an end time of the first time-domain resource, an end time of the third time-domain resource is earlier than or equal to a time obtained by subtracting T from a start time of the second time-domain resource, and T is greater than or equal to 0. This implementation enables receiving the indication information on the third time-domain resource between the first time-domain resource and the second time-domain resource, and reserves a duration of T for the first device to process the indication information and/or configure the second transmission parameter for the second time-domain resource. The third time-domain resource and T may be determined according to actual needs in a case that the above requirements are meet, which is not limited in the present disclosure. For example, T is greater than or equal to a processing time, and the processing time may include at least one of the following: a processing time of the indication information, a processing time of determining the second transmission parameter, or a processing time of adjusting the transmission parameter.

S304: the first device acquires the second transmission parameter according to the indication information.

In a possible implementation, the indication information includes the second transmission parameter, and the second transmission parameter is directly extracted from the indication information.

In another possible implementation, the indication information may include information indicating the second transmission parameter. For example, the indication information includes the identifier/index indicating the second transmission parameter, and the first device determines, according to the identifier/index, from a plurality of preset transmission parameters that a transmission parameter corresponding to the identifier is the second transmission parameter. For example, the second transmission parameter may be determined according to the identifier/index and a mapping relationship between the identifier/index and the transmission parameter.

In another possible implementation, the indication information indicates the transmission parameter offset or the transmission parameter range for determining the second transmission parameter, and the first device determines the second transmission parameter according to the transmission parameter offset or the transmission parameter range. For example, the first device determines the second transmission parameter according to the first transmission parameter and the transmission parameter offset. The second transmission parameter may be the first transmission parameter plus the transmission parameter offset. For another example, the second transmission parameter determined by the first device falls within the transmission parameter range.

In yet another possible implementation, the indication information indicates the second sensing data of the target object, and the first device determines the second transmission parameter according to the second sensing data of the target object. For example, the second sensing data of the target object is a position of the target object, the second transmission parameter includes a second transmission beam direction, and the second transmission beam direction is determined to be a direction that can align with the position of the target object.

In yet another possible implementation, the first device determines the second transmission parameter according to the first transmission parameter and the indication information. For example, the indication information indicates the transmission parameter offset, and the first device determines the second transmission parameter as the first transmission parameter plus the transmission parameter offset.

In still another possible implementation, the first device determines the second transmission parameter according to the second time-domain resource and the indication information. For example, the second transmission parameter includes the second transmission beam direction, the indication information indicates the second sensing data of the target object, and the first device predicts the position of the target object at the time of the second time-domain resource according to the second sensing data, and determines the second transmission beam direction as a direction aligned with the predicted position of the target object.

In still another possible implementation, the first device determines the second transmission parameter according to the first transmission parameter, the second time-domain resource and the indication information. For example, the second transmission parameter includes the second transmission beam direction, the indication information indicates a direction offset of the target object, and the first device predicts a direction of the target object at the time of the second time-domain resource according to a first transmission beam direction and the direction offset of the target object, and determines the second transmission beam direction as a direction aligning with the predicted target object.

Optionally, if the first device does not receive the indication information on the third time-domain resource, it may use the first transmission parameter as the second transmission parameter. If the first device does not receive the indication information on the third time-domain resource, it indicates that there may be a situation that the first device cannot receive the indication information, or that the second device cannot send the indication information to the first device on time, or that the second device does not need to instruct the first device to adjust the second transmission parameter on the second time-domain resource (for example, if a position distance of the target object before and after movement is close, there is no need to adjust the beam direction of the sensing signal), etc. Therefore, the second sensing signal may be transmitted using the second transmission parameter that is the same as the first transmission parameter.

S305: the first device transmits the second sensing signal using the second transmission parameter on the second time-domain resource.

In the implementations provided by the embodiments of the present disclosure, the second device sends the indication information to the first device, so that the first device can acquire the second transmission parameter according to the indication information and transmit the second sensing signal using the second transmission parameter on the second time-domain resource. The second transmission parameter acquired by the first device through the indication information enables the adjustment of the second transmission parameter when sensing a moving target object, thereby better sensing the target object. When the second device is a device other than the sensing signal receiving end and the sensing signal sending end, the step of processing the sensing data or determining the second transmission parameter may be transferred to this other device, so that the sensing signal receiving end and the sensing signal sending end do not need to process the sensing data or determine the second transmission parameter, thereby reducing the data processing requirements on the sensing signal receiving end and the sensing signal sending end.

In the following, how to obtain the second transmission parameter, the transmission parameter offset for determining the second transmission parameter, or the transmission parameter range for determining the second transmission parameter based on the sensing data of the target object in the aforementioned implementations is introduced.

In a possible implementation, according to a position of the target object in the sensing data and positions of the target object in historical sensing signals prior to the first sensing signal, a direction of a position or a position range of the target object in the second time-domain resource relative to the first device is predicted, and a beam direction in the second transmission parameter is determined.

In another possible implementation, according to the position of the target object in the sensing data and the positions of the target object in the historical sensing signals prior to the first sensing signal, the direction of the position or the position range of the target object in the second time-domain resource relative to the first device is predicted. According to a difference between the direction in this prediction result and a direction determined from the sensing data of the target object acquired based on the first sensing signal, a deviation range of the second transmission parameter is determined. According to this deviation range and the first transmission parameter, the first transmission parameter fused with the deviation range is used as the second transmission parameter.

Therefore, when the indication information includes calculation data for calculating the second transmission parameter, the calculation data may include the position of the target object in the sensing data, and the positions of the target object in the historical sensing signals prior to the first sensing signal, or the prediction result of the position or the position range of the target object in the second time-domain resource relative to the first device, or the deviation range of the second transmission parameter and the first transmission parameter, etc.

In the method provided by the embodiments of the present disclosure, based on the sensing data of the target object obtained from the first sensing signal, the position or direction of the target object within a time range corresponding to the second time-domain resource is predicted, so as to generate the second transmission parameter that can enable the second sensing signal to align with the target object. This allows the first device to send the second sensing signal on the second time-domain resource using a beam aligned with the target object, thereby improving the sensing capability of communication and sensing.

For ease of understanding, the specific implementations of the method described in FIG. 2 and FIG. 3 are introduced in combination with scenarios where the first device and the second device serve as different device roles respectively.

Optionally, the first transmission parameter may include: a first sending parameter and/or a first receiving parameter, the second transmission parameter may include: a second sending parameter and/or a second receiving parameter, and the indication information may include: first indication information and/or second indication information. The first indication information is used to determine the second sending parameter, and the second indication information is used to determine the second receiving parameter. The first indication information is used to indicate the second sending parameter, the second sensing data of the target object, a sending parameter offset for determining the second sending parameter, or a sending parameter range for determining the second sending parameter. The second indication information is used to indicate the second receiving parameter, the second sensing data of the target object, a receiving parameter offset for determining the second receiving parameter, or a receiving parameter range for determining the second receiving parameter.

If the indication information is the first indication information, the first device is the sensing signal sending end, then the second device may be the sensing signal receiving end, or the second device may be the device other than the sensing signal sending end and the sensing signal receiving end. If the indication information is the second indication information, the first device is the sensing signal receiving end, and the second device may be the sensing signal sending end or the device other than the sensing signal sending end and the sensing signal receiving end.

It should be noted that whether the indication information is the first indication information or the second indication information may be determined according to whether the first device is the sensing signal sending end or the sensing signal receiving end, or, may be determined by an identifier included in the indication information, or, the first device may not need to determine or judge.

Scenario 1: the first device is a sensing signal sending end, and the second device is a sensing signal receiving end.

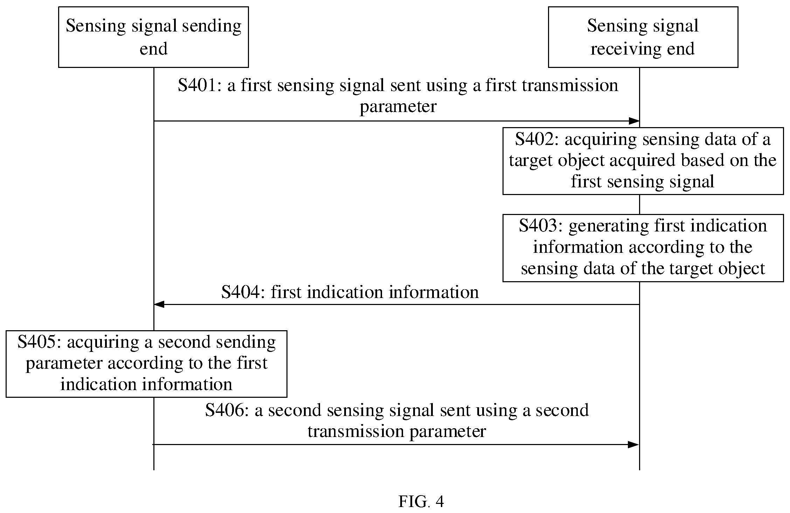

FIG. 4 is a schematic flowchart of yet another communication and sensing method provided by an embodiment of the present disclosure. As shown in FIG. 4, the aforementioned method may include the following steps.

S401: the sensing signal sending end sends a first sensing signal using a first sending parameter on a first time-domain resource.

Correspondingly, the sensing signal receiving end receives the first sensing signal using a first receiving parameter on the first time-domain resource.

S402: the sensing signal receiving end acquires sensing data of a target object acquired based on the first sensing signal.

After the sensing signal sending end sends the sensing signal, the sensing signal receiving end receives the sensing signal after reflection, scattering, and the like caused by the target object, and extracts the sensing data of the target object after performing data processing on the sensing signal.

S403: the sensing signal receiving end generates first indication information according to the sensing data of the target object.

The first indication information is used to indicate a second sending parameter, the sensing data of the target object, a sending parameter offset for determining the second sending parameter, or a sending parameter range for determining the second sending parameter. The method for generating the first indication information is similar to the method in step S302 where the second device generates the indication information according to the first sensing data of the target object. The difference is that only the first indication information for determining the second sending parameter is generated here, which will not be repeated here.

S404: the sensing signal receiving end sends the first indication information to the sensing signal sending end.

Correspondingly, the sensing signal sending end receives the first indication information sent by the sensing signal receiving end.

Optionally, if it is determined that the sensing data of the target object satisfies a criterion, or that a change in the sensing data of the target object satisfies a criterion, or that a change in the second sending parameter satisfies a criterion, the first indication information is sent to the sensing signal sending end. If the above condition is determined to be satisfied, it indicates that a position of the target object changes significantly at this time, and the second sending parameter needs to be adjusted, so the first indication information is sent to the sensing signal sending end. Conversely, it indicates that a position change of the target object is small, and the second sending parameter may not be adjusted, that is, the first indication information may not be sent to the sensing signal sending end. The sensing data of the target object satisfying the criterion is, for example, that the sensing data of the target object is greater than or equal to a first threshold. The change in the sensing data of the target object satisfying the criterion is, for example, that the change in the sensing data of the target object is greater than or equal to the first threshold. The change in the second sending parameter satisfying the criterion is, for example, that the change in the second sending parameter is greater than or equal to a second threshold.

Optionally, the sensing signal sending end receives the first indication information sent by the sensing signal receiving end on a third time-domain resource. A start time of the third time-domain resource is equal to or later than an end time of the first time-domain resource, an end time of the third time-domain resource is earlier than or equal to a time obtained by subtracting T1 from a start time of a second time-domain resource, and T1 is greater than or equal to 0. This implementation enables receiving the indication information on the third time-domain resource between the first time-domain resource and the second time-domain resource, and reserves a duration of T1 for the sensing signal sending end to process the first indication information and/or configure the second sending parameter for the second time-domain resource. The third time-domain resource and T1 may be determined according to actual needs in a case that the above requirements are meet, which is not limited in the present disclosure. For example, T1 is greater than or equal to a processing time, and the processing time may include at least one of the following: a processing time of the first indication information, a processing time of determining the second sending parameter, or a processing time of adjusting the sending parameter.

Optionally, if the first indication information is not received on the third time-domain resource, it may indicate a situation where the first device cannot receive the indication information, or, the sensing signal receiving end cannot send the indication information to the sensing signal sending end on time, or, the sensing signal receiving end does not need to instruct the sensing signal sending end to adjust the second transmission parameter on the second time-domain resource (for example, if a position distance of the target object before and after movement is close, there is no need to adjust a beam direction of the sensing signal), etc. Therefore, the second sensing signal may be transmitted using the second sending parameter that is the same as the first sending parameter.

In a possible implementation, if the indication information is not received on a specified time-domain resource, the second transmission parameter may also be set to any preset transmission parameter, so as to avoid the impact of the above situations on the sensing function.

S405: the sensing signal sending end acquires the second sending parameter according to the first indication information.

The method for the sensing signal sending end to acquire the second sending parameter according to the first indication information may refer to the contents of how the first device acquires the second transmission parameter according to the indication information in step S304 above, which will not be repeated here.

S406: the sensing signal sending end sends a second sensing signal using the second sending parameter on the second time-domain resource.

Correspondingly, the sensing signal receiving end receives the second sensing signal using a second receiving parameter on the second time-domain resource. The sensing signal receiving end may determine the second receiving parameter according to the first sensing signal received on the first time-domain resource.

In the method provided by the embodiments of the present disclosure, the sensing signal receiving end, in addition to having the function of receiving sensing signals, also undertakes the function of generating, according to the sensing data, the second sending parameter to be used by the sensing signal sending end on the second time-domain resource, thereby, without adding a hardware entity, realizing the adjustment of the second transmission parameter when sensing a moving target object, and further adjustment of the sensing signal.

Scenario 2: the first device is a sensing signal receiving end, and the second device is a sensing signal sending end.

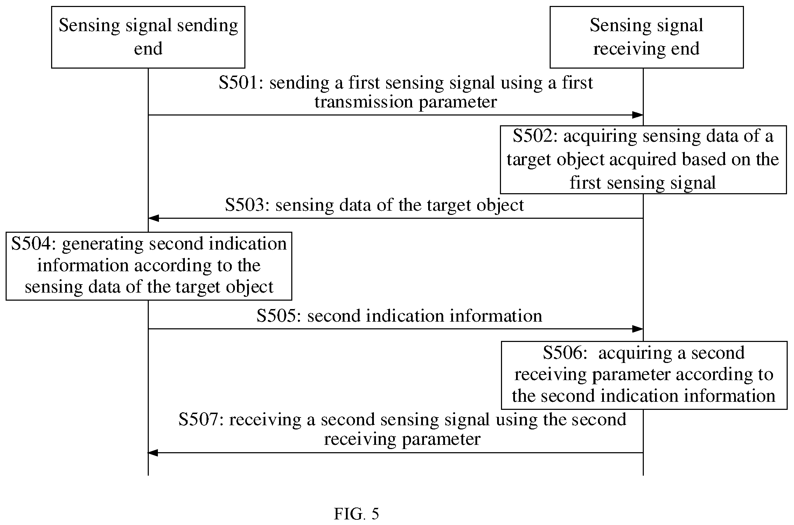

FIG. 5 is a schematic flowchart of yet another communication and sensing method provided by an embodiment of the present disclosure. As shown in FIG. 5, the aforementioned method may include the following steps.

S501: the sensing signal sending end sends a first sensing signal using a first sending parameter on a first time-domain resource.

Correspondingly, the sensing signal receiving end receives the first sensing signal using a first receiving parameter on the first time-domain resource.

S502: the sensing signal receiving end acquires sensing data of a target object according to the first sensing signal.

After the sensing signal sending end sends the sensing signal, the sensing signal receiving end receives the sensing signal after reflection, scattering, and the like caused by the target object, and extracts the sensing data of the target object after performing data processing on the sensing signal.

S503: the sensing signal receiving end sends the sensing data of the target object acquired based on the first sensing signal to the sensing signal sending end.

Optionally, when the sensing signal receiving end determines that a change in the sensing data of the target object satisfies a criterion or the sensing data of the target object satisfies a criterion, the sensing signal receiving end sends the sensing data of the target object to the sensing signal sending end. For example, when a difference value compared to the last acquired sensing data is greater than or equal to a preset threshold, it indicates that a position of the target object before and after movement differs significantly, and a second receiving parameter needs to be adjusted. Therefore, the current sensing data needs to be sent to the sensing signal sending end, so that the sensing signal sending end can generate second indication information indicating a changed second receiving parameter. If the change in the sensing data of the target object does not satisfy the criterion or the sensing data of the target object does not satisfy the criterion, the sensing signal receiving end does not send the sensing data of the target object to the sensing signal sending end. For example, when the difference value compared to the last acquired sensing data is less than the preset threshold, it indicates that the target object does not move, or the position difference before and after movement is small, and the second receiving parameter does not need to be adjusted. Therefore, the sensing data may not be sent, so that the sensing signal receiving end receives a second sensing signal on a second time-domain resource using the second receiving parameter that is the same as the first receiving parameter.

Correspondingly, the sensing signal sending end receives the sensing data of the target object acquired based on the first sensing signal.

S504: the sensing signal sending end generates the second indication information according to the sensing data of the target object.

The second indication information is used to indicate the second receiving parameter, the sensing data of the target object, a receiving parameter offset for determining the second receiving parameter, or a receiving parameter range for determining the second receiving parameter. The method for generating the second indication information is similar to the method in step S302 where the second device generates the indication information according to the first sensing data of the target object. The difference is that only the second indication information for determining the second receiving parameter is generated here, which will not be repeated here.

S505: the sensing signal sending end sends the second indication information to the sensing signal receiving end.

Correspondingly, the sensing signal receiving end receives the second indication information sent by the sensing signal sending end.

Optionally, if it is determined that the sensing data of the target object satisfies the criterion, or that the change in the sensing data of the target object satisfies the criterion, or that the change in the second receiving parameter satisfies the criterion, the second indication information is sent to the sensing signal receiving end. If the above condition is determined to be satisfied, it indicates that a position of the target object changes significantly at this time, and the second receiving parameter needs to be adjusted, so the second indication information is sent to the sensing signal receiving end. Conversely, it indicates that a position change of the target object is small, and the second receiving parameter may not be adjusted, that is, the second indication information may not be sent to the sensing signal receiving end. The sensing data of the target object satisfying the criterion is, for example, that the sensing data of the target object is greater than or equal to a first threshold. The change in the sensing data of the target object satisfying the criterion is, for example, that the change in the sensing data of the target object is greater than or equal to the first threshold. The change in the second receiving parameter satisfying the criterion is, for example, that the change in the second receiving parameter is greater than or equal to a second threshold.

Optionally, the sensing signal receiving end receives the second indication information sent by the sensing signal sending end on a fourth time-domain resource. A start time of the fourth time-domain resource is equal to or later than an end time of the first time-domain resource, an end time of the fourth time-domain resource is earlier than or equal to a time obtained by subtracting T2 from a start time of the second time-domain resource, and T2 is greater than or equal to 0. This implementation enables receiving the indication information on the fourth time-domain resource between the first time-domain resource and the second time-domain resource, and reserves a duration of T2 for the sensing signal sending end to process the second indication information and/or configure the second receiving parameter for the second time-domain resource. The fourth time-domain resource and T2 may be determined according to actual needs in a case that the above requirements are meet, which is not limited in the present disclosure. For example, T2 is greater than or equal to a processing time, and the processing time may include at least one of the following: a processing time of the second indication information, a processing time of determining the second receiving parameter, or a processing time of adjusting the receiving parameter.

Optionally, if the second indication information is not received on the fourth time-domain resource, it may indicate a situation where the first device cannot receive the indication information, or, the sensing signal sending end cannot send the indication information to the sensing signal receiving end on time, or, the sensing signal sending end does not need to instruct the sensing signal receiving end to adjust the second transmission parameter on the second time-domain resource (for example, if a position distance of the target object before and after movement is close, there is no need to adjust a beam direction of the sensing signal), etc. Therefore, the second sensing signal may be received using the second receiving parameter that is the same as the first receiving parameter.

In a possible implementation, if the indication information is not received on a specified time-domain resource, the second transmission parameter may also be set to any preset transmission parameter, so as to avoid the impact of the above situations on the sensing function.

S506: the sensing signal receiving end acquires the second receiving parameter according to the second indication information.

The method for the sensing signal receiving end to acquire the second receiving parameter according to the second indication information may refer to the contents of how the first device acquires the second transmission parameter according to the indication information in step S304 above, which will not be repeated here.

S507: the sensing signal receiving end receives the second sensing signal using the second receiving parameter on the second time-domain resource.

Correspondingly, the sensing signal sending end sends the second sensing signal using a second sending parameter on the second time-domain resource. The sensing signal sending end may determine the second sending parameter according to the sensing data of the target object.

A difference between this embodiment and the embodiment shown in FIG. 5 lies in that the second transmission parameter to be adjusted in this embodiment is the second receiving parameter used by the sensing signal receiving end to receive the second sensing signal on the second time-domain resource, the sensing signal receiving end sends the sensing data to the sensing signal sending end, and the sensing signal sending end undertakes the data processing function of acquiring the indication information according to the sensing data.

Scenario 3: the first device is a sensing signal sending end, and the second device is a device other than the sensing signal sending end and the sensing signal receiving end (another device).

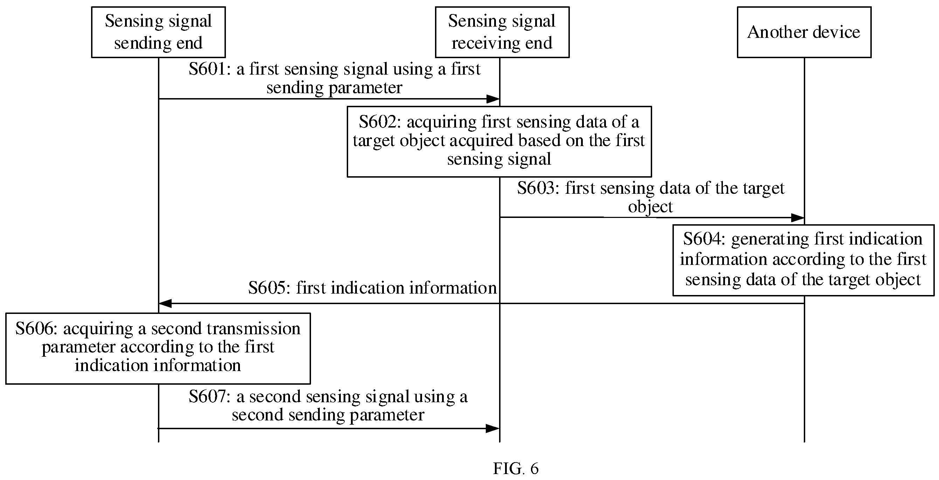

FIG. 6 is a schematic flowchart of still another communication and sensing method provided by an embodiment of the present disclosure. As shown in FIG. 6, the aforementioned method may include the following steps.

S601: the sensing signal sending end sends a first sensing signal using a first sending parameter on a first time-domain resource.

Correspondingly, the sensing signal receiving end receives the first sensing signal using a first receiving parameter on the first time-domain resource.

S602: the sensing signal receiving end acquires first sensing data of a target object acquired based on the first sensing signal.

S603: the sensing signal receiving end sends the first sensing data of the target object to the other device.

Optionally, when the sensing signal receiving end determines that a change in the first sensing data of the target object satisfies a criterion or the first sensing data of the target object satisfies a criterion, the sensing signal receiving end sends the first sensing data of the target object to the other device. For example, when a difference value compared to the last acquired first sensing data is greater than or equal to a preset threshold, it indicates that a position of the target object before and after movement differs significantly, and a second sending parameter needs to be adjusted. Therefore, the current first sensing data needs to be sent to the other device, so that the other device can generate first indication information indicating a changed second sending parameter. If the change in the first sensing data of the target object does not satisfy the criterion or the first sensing data of the target object does not satisfy the criterion, the sensing signal receiving end does not send the first sensing data of the target object to the other device. For example, when the difference value compared to the last acquired first sensing data is less than the preset threshold, it indicates that the target object does not move, or a position difference before and after movement is small, and the second sending parameter does not need to be adjusted. Therefore, the first sensing data may not be sent, so that the sensing signal sending end sends a second sensing signal on a second time-domain resource using the second sending parameter that is the same as the first sending parameter.

Correspondingly, the other device receives the first sensing data of the target object.

S604: the other device generates the first indication information according to the first sensing data of the target object.

The first indication information is used to indicate the second sending parameter, second sensing data of the target object, a sending parameter offset for determining the second sending parameter, or a sending parameter range for determining the second sending parameter. The method for generating the first indication information is similar to the method in step S302 where the second device generates the indication information according to the first sensing data of the target object. The difference is that only the first indication information for determining the second sending parameter is generated here, which will not be repeated here.

S605: the other device sends the first indication information to the sensing signal sending end.

Correspondingly, the sensing signal sending end receives the first indication information sent by the other device.

Optionally, when the other device determines that the second sensing data of the target object satisfies a criterion, or a change in the second sensing data of the target object satisfies a criterion, or a change in the second sending parameter satisfies a criterion, it sends the first indication information to the sensing signal sending end. For example, when a difference value compared to the last acquired sensing data is greater than or equal to a preset threshold, it indicates that a position of the target object before and after movement differs significantly, and the second sending parameter needs to be adjusted. Therefore, the first indication information indicating a changed second sending parameter is generated. If the sensing data of the target object does not change, or the difference value compared to the last acquired sensing data is less than the preset threshold, it indicates that the target object does not move, or the position difference before and after movement is small, and the second sending parameter does not need to be adjusted. Therefore, the first indication information may not be generated, so that the sensing signal sending end sends the second sensing signal on the second time-domain resource using the second sending parameter that is the same as the first sending parameter.

Optionally, the sensing signal sending end receives the first indication information sent by the other device on a third time-domain resource. A start time of the third time-domain resource is equal to or later than an end time of the first time-domain resource, an end time of the third time-domain resource is earlier than or equal to a time obtained by subtracting T1 from a start time of the second time-domain resource, and T1 is greater than or equal to 0. This implementation enables receiving the indication information on the third time-domain resource between the first time-domain resource and the second time-domain resource, and reserves a duration of T1 for the sensing signal sending end to process the first indication information and/or configure the second sending parameter for the second time-domain resource. The third time-domain resource and T1 may be determined according to actual needs in a case that the above requirements are meet, which is not limited in the present disclosure. For example, T1 is greater than or equal to a processing time, and the processing time may include at least one of the following: a processing time of the first indication information, a processing time of determining the second sending parameter, and a processing time of adjusting the sending parameter.

Optionally, if the first indication information is not received on the third time-domain resource, it may indicate a situation where the first device cannot receive the indication information, or, the other device cannot send the indication information to the sensing signal sending end on time, or, the other device does not need to instruct the sensing signal sending end to adjust the second transmission parameter on the second time-domain resource (for example, if a position distance of the target object before and after movement is close, there is no need to adjust a beam direction of the sensing signal), etc. Therefore, the second sensing signal may be sent using the second sending parameter that is the same as the first sending parameter.

S606: the sensing signal sending end acquires the second sending parameter according to the first indication information.

The method for the sensing signal sending end to acquire the second sending parameter according to the first indication information may refer to the contents of how the first device acquires the second transmission parameter according to the indication information in step S304 above, which will not be repeated here.

S607: the sensing signal sending end sends the second sensing signal using the second sending parameter on the second time-domain resource.

Correspondingly, the sensing signal receiving end receives the first sensing signal using a second receiving parameter on the second time-domain resource. The sensing signal receiving end may determine the second receiving parameter according to the first sensing signal received on the first time-domain resource.

A difference between this embodiment and the embodiment shown in FIG. 4 lies in that a device undertaking the data processing function of acquiring the indication information according to the sensing data in this embodiment is the other device except for the sensing signal receiving end and the sensing signal sending end, the sensing signal receiving end sends the sensing data to the other device, and the other device sends the indication information to the sensing signal sending end after acquiring the indication information according to the sensing data. Other similar parts will not be repeated here.

In the method provided by the embodiments of the present disclosure, by adding a third-party device that undertakes the data processing function of acquiring the indication information according to the sensing data, the function of adjusting the second transmission parameter when sensing a moving target object and further adjusting the sensing signal is realized, while avoiding increasing the data processing pressure on the sensing signal sending end or the sensing signal receiving end, so that the hardware of the sensing signal sending end or the sensing signal receiving end does not need to be adjusted.

Scenario 4: the first device is a sensing signal receiving end, and the second device is a device other than the sensing signal sending end and the sensing signal receiving end (another device).

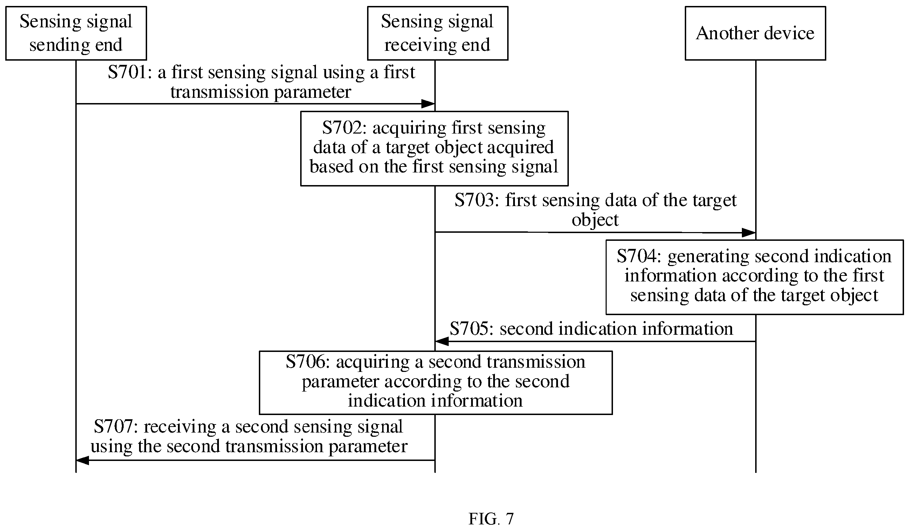

FIG. 7 is a schematic flowchart of still another communication and sensing method provided by an embodiment of the present disclosure. As shown in FIG. 7, the aforementioned method may include the following steps.

S701: the sensing signal sending end sends a first sensing signal using a first sending parameter on a first time-domain resource.

Correspondingly, the sensing signal receiving end receives the first sensing signal using a first receiving parameter on the first time-domain resource.

S702: the sensing signal receiving end acquires first sensing data of a target object according to the first sensing signal.

After the sensing signal sending end sends the sensing signal, the sensing signal receiving end receives the sensing signal after reflection, scattering, and the like caused by the target object, and extracts the first sensing data of the target object after performing data processing on the sensing signal.

S703: the sensing signal receiving end sends the first sensing data of the target object to the other device.

Correspondingly, the other device receives the first sensing data of the target object.

Optionally, when the sensing signal receiving end determines that a change in the first sensing data of the target object satisfies a criterion or the first sensing data of the target object satisfies a criterion, the sensing signal receiving end sends the first sensing data of the target object to the other device. For example, when a difference value compared to the last acquired first sensing data is greater than or equal to a preset threshold, it indicates that a position of the target object before and after movement differs significantly, and a second receiving parameter needs to be adjusted. Therefore, the current first sensing data needs to be sent to the other device, so that the other device can generate second indication information indicating a changed second receiving parameter. If the change in the first sensing data of the target object does not satisfy the criterion or the first sensing data of the target object does not satisfy the criterion, the sensing signal receiving end does not send the first sensing data of the target object to the other device. For example, when the difference value compared to the last acquired first sensing data is less than the preset threshold, it indicates that the target object does not move, or the position difference before and after movement is small, and the second receiving parameter does not need to be adjusted. Therefore, the first sensing data may not be sent, so that the sensing signal receiving end sends a second sensing signal on a second time-domain resource using the second receiving parameter that is the same as the first receiving parameter.

S704: the other device generates the second indication information according to the first sensing data of the target object.

The second indication information is used to indicate the second receiving parameter, second sensing data of the target object, a receiving parameter offset for determining the second receiving parameter, or a receiving parameter range for determining the second receiving parameter. The method for generating the second indication information is similar to the method in step S302 where the second device generates the indication information according to the first sensing data of the target object. The difference is that only the second indication information for determining the second receiving parameter is generated here, which will not be repeated here.

S705: the other device sends the second indication information to the sensing signal receiving end.

Correspondingly, the sensing signal receiving end receives the second indication information sent by the other device.

Optionally, when the other device determines that the second sensing data of the target object satisfies a criterion, or a change in the second sensing data of the target object satisfies a criterion, or a change in the second receiving parameter satisfies a criterion, it sends the second indication information to the sensing signal receiving end. For example, when a difference value compared to the last acquired second sensing data is greater than or equal to a preset threshold, it indicates that a position of the target object before and after movement differs significantly, and the second receiving parameter needs to be adjusted. Therefore, the second indication information indicating a changed second receiving parameter is generated. If the second sensing data of the target object does not change, or the difference value compared to the last acquired second sensing data is less than the preset threshold, it indicates that the target object does not move, or a position difference before and after movement is small, and the second receiving parameter does not need to be adjusted. Therefore, the second indication information may not be generated, so that the sensing signal receiving end receives the second sensing signal on the second time-domain resource using the second receiving parameter that is the same as the first receiving parameter.

Optionally, the sensing signal receiving end receives the second indication information sent by the other device on a fourth time-domain resource. A start time of the fourth time-domain resource is equal to or later than an end time of the first time-domain resource, an end time of the fourth time-domain resource is earlier than or equal to a time obtained by subtracting T2 from a start time of a second time-domain resource, and T2 is greater than or equal to 0. This implementation enables receiving the indication information on the fourth time-domain resource between the first time-domain resource and the second time-domain resource, and reserves a duration of T2 for the sensing signal receiving end to process the second indication information and/or configure the second receiving parameter for the second time-domain resource. The fourth time-domain resource and T2 may be determined according to actual needs in a case that the above requirements are meet, which is not limited in the present disclosure. For example, T2 is greater than or equal to a processing time, and the processing time may include at least one of the following: a processing time of the second indication information, a processing time of determining the second receiving parameter, and a processing time of adjusting the receiving parameter.

Optionally, if the second indication information is not received on the fourth time-domain resource, it may indicate a situation where the first device cannot receive the indication information, or, the other device cannot send the indication information to the sensing signal receiving end on time, or, the other device does not need to instruct the sensing signal receiving end to adjust the second transmission parameter on the second time-domain resource (for example, if a position distance of the target object before and after movement is small, there is no need to adjust a beam direction of the sensing signal), etc. Therefore, the second sensing signal may be sent using the second receiving parameter that is the same as the first receiving parameter.

S706: the sensing signal receiving end acquires the second receiving parameter according to the second indication information.

The method for the sensing signal receiving end to acquire the second receiving parameter according to the second indication information may refer to the contents of how the first device acquires the second transmission parameter according to the indication information in step S304 above, which will not be repeated here.

S707: the sensing signal receiving end receives the second sensing signal using the second receiving parameter on the second time-domain resource.

Correspondingly, the sensing signal sending end sends the second sensing signal using a second sending parameter on the second time-domain resource.

A difference between this embodiment and the embodiment shown in FIG. 6 is that the second transmission parameter to be adjusted in this embodiment is the second receiving parameter used by the sensing signal receiving end to receive the second sensing signal on the second time-domain resource. Other similar parts will not be repeated here.

It should be understood that the above four implementations may be integrated with each other according to actual requirements. For example, the embodiment shown in FIG. 6 and the embodiment shown in FIG. 7 may be integrated, where the second device sends the first indication information to the sensing signal sending end and also sends the second indication information to the sensing signal receiving end, so that the sensing signal sending end determines the second sending parameter, and the sensing signal receiving end determines the second receiving parameter. Or, the sensing signal receiving end and the sensing signal sending end are the same device, and the embodiment shown in FIG. 6 may be integrated with the embodiment shown in FIG. 7, where the other device determines the indication information according to the first sensing data, and sends the indication information to the sensing signal receiving end and/or the sensing signal sending end through such other device, so that the sensing signal receiving end and/or the sensing signal sending end determine the second transmission parameter. Or, the sensing signal receiving end and the sensing signal sending end are the same device, and the embodiment shown in FIG. 4 may be integrated with the embodiment shown in FIG. 5, where the device itself determines the second transmission parameter according to the sensing data of the target object. This implementation does not require generating and sending the first indication information and acquiring the second sending parameter according to the first indication information, nor does it require sending the sensing data of the target object, generating and sending the second indication information, and acquiring the second receiving parameter according to the second indication information. Embodiments obtained by integrating the above implementations will not be repeated in the present disclosure.

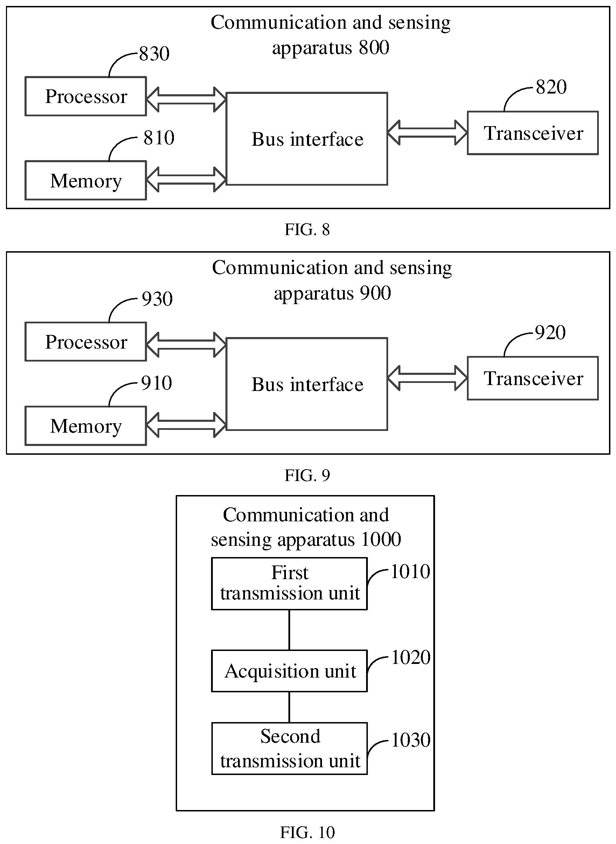

FIG. 8 is a schematic structural diagram of a communication and sensing apparatus provided by an embodiment of the present disclosure. As shown in FIG. 8, the apparatus 800 is applied to a first device, and the apparatus 800 includes: a memory 810, a transceiver 820, and a processor 830;
the memory 810 is configured to store a computer program; the transceiver 820 is configured to transceive data under control of the processor 830; the processor 830 is configured to read the computer program stored in the memory 810 and perform the following operations:
transmitting a first sensing signal using a first transmission parameter on a first time-domain resource;
acquiring a second transmission parameter, where the second transmission parameter is related to the first transmission parameter, and/or, the second transmission parameter is related to sensing data of a target object acquired based on the first sensing signal;
transmitting a second sensing signal using the second transmission parameter on a second time-domain resource, where both the first sensing signal and the second sensing signal are used for sensing the target object.

Optionally, the processor is specifically configured to perform the following operations:
receiving indication information sent by a second device, where the indication information is used to indicate the second transmission parameter or the sensing data of the target object;
acquiring the second transmission parameter according to the indication information.

Optionally, the first transmission parameter includes: a first sending parameter and/or a first receiving parameter, the second transmission parameter includes: a second sending parameter and/or a second receiving parameter, and the indication information includes: first indication information and/or second indication information;
if the indication information is the first indication information, the first device is a sensing signal sending end, the second device is a sensing signal receiving end or a device other than the sensing signal sending end and the sensing signal receiving end, and the first indication information is used to determine the second sending parameter;
if the indication information is the second indication information, the first device is a sensing signal receiving end, the second device is a sensing signal sending end or a device other than the sensing signal sending end and the sensing signal receiving end, and the second indication information is used to determine the second receiving parameter.

Optionally, the processor is specifically configured to perform the following operations:
receiving the first indication information sent by the second device on a third time-domain resource, where a start time of the third time-domain resource is equal to or later than an end time of the first time-domain resource, an end time of the third time-domain resource is earlier than or equal to a time obtained by subtracting T1 from a start time of the second time-domain resource, and T1 is greater than or equal to 0;
and/or, receiving the second indication information sent by the second device on a fourth time-domain resource, where a start time of the fourth time-domain resource is equal to or later than the end time of the first time-domain resource, an end time of the fourth time-domain resource is earlier than or equal to a time obtained by subtracting T2 from the start time of the second time-domain resource, and T2 is greater than or equal to 0.

Optionally, the processor is further configured to perform the following operations:
if the first indication information is not received on the third time-domain resource, the second sending parameter is the same as the first sending parameter;
   and/or,
if the second indication information is not received on the fourth time-domain resource, the second receiving parameter is the same as the first receiving parameter.

Optionally, before receiving the indication information sent by the second device, the processor is further configured to perform the following operations:
acquiring the sensing data of the target object according to the first sensing signal;
sending the sensing data to the second device.

Optionally, the processor is specifically configured to perform the following operations:
sending the sensing data to the second device upon determining that the sensing data of the target object changes.

The apparatus 800 may further include a user interface 880. For different terminal devices, the user interface 880 may also be an interface that can externally and internally connect required devices, and the connected devices include, but are not limited to a small keypad, a display, a speaker, a microphone, a joystick, etc.

Herein, a bus architecture may include any number of interconnected buses and bridges, and specifically, various circuits of one or more processors represented by the processor 830 and a memory represented by the memory 810 are linked together. The bus architecture may also link various other circuits, such as a peripheral device, a voltage regulator, a power management circuit and the like, which are well known in the art and thus will not be further described here. A bus interface provides an interface. The transceiver 820 may be a plurality of elements, that is, including a transmitter and a receiver, and provide a unit for communicating with various other apparatuses on transmission media. These transmission media include a wireless channel, a wired channel, an optical cable and other transmission media. The processor 830 is responsible for managing the bus architecture and general processing, and the memory 810 can store data used by the processor 830 when performing operations.

Optionally, the processor 830 may be a central processing unit (central processing unit, CPU), an application specific integrated circuit (application specific integrated circuit, ASIC), a field-programmable gate array (field-programmable gate array, FPGA), or a complex programmable logic device (complex programmable logic device, CPLD). The processor may also adopt a multi-core architecture.

By calling the computer program stored in the memory 810, the processor 830 is configured to execute all the method steps of the terminal device in the embodiments of the present disclosure according to obtained an executable instruction. The processor 830 and the memory 810 may also be physically separated.

It should be noted here that the apparatus 800 provided by the present disclosure can implement all the method steps implemented by the first device in the above method embodiments, and can achieve the same technical effects. The part of this embodiment which is the same as the method embodiments and the beneficial effects thereof will not be described in detail here.

FIG. 9 is a schematic structural diagram of another communication and sensing apparatus provided by an embodiment of the present disclosure. As shown in FIG. 9, the apparatus 900 is applied to a second device, and the apparatus 900 includes: a memory 99, a transceiver 920, and a processor 930.

The memory 99 is configured to store a computer program; the transceiver 920 is configured to transceive data under control of the processor 930; the processor 930 is configured to read the computer program stored in the memory 99 and perform the following operations:
acquiring first sensing data of a target object;
generating indication information according to the first sensing data of the target object, where the indication information is used to indicate a second transmission parameter or second sensing data of the target object, the second transmission parameter is used by a first device to transmit a second sensing signal on a second time-domain resource, and the second sensing signal is used for sensing the target object;
sending the indication information to the first device.

Optionally, a first transmission parameter includes: a first sending parameter and/or a first receiving parameter, the second transmission parameter includes: a second sending parameter and/or a second receiving parameter, and the indication information includes: first indication information and/or second indication information;
if the indication information is the first indication information, the first device is a sensing signal sending end, the second device is a sensing signal receiving end or a device other than the sensing signal sending end and the sensing signal receiving end, and the first indication information is used to determine the second sending parameter;
if the indication information is the second indication information, the first device is a sensing signal receiving end, the second device is a sensing signal sending end or a device other than the sensing signal sending end and the sensing signal receiving end, and the second indication information is used to determine the second receiving parameter.

Optionally, if the second device is the device other than the sensing signal sending end and the sensing signal receiving end, the processor is specifically configured to perform the following operations:
receiving the first sensing data of the target object sent by the sensing signal receiving end.

Optionally, the processor is specifically configured to perform the following operations:
sending the indication information to the first device upon determining that the second sensing data of the target object or a change in the second sensing data of the target object is greater than or equal to a first threshold, or a change in the second transmission parameter is greater than or equal to a second threshold.

Optionally, the first sensing data of the target object is acquired based on a first sensing signal transmitted using a first transmission parameter on a first time-domain resource, the first sensing signal is used for sensing the target object; the first transmission parameter includes: a first sending parameter and/or a first receiving parameter.

Herein, in FIG. 9, a bus architecture may include any number of interconnected buses and bridges, and specifically, various circuits of one or more processors represented by the processor 930 and a memory represented by the memory 99 are linked together. The bus architecture may also link together various other circuits, such as a peripheral device, a voltage regulator, a power management circuit and the like, which are well known in the art and thus will not be further described herein. A bus interface provides an interface. The transceiver 920 may be a plurality of elements, that is, including a transmitter and a receiver, and provide a unit for communicating with various other apparatuses on transmission media. These transmission media include a wireless channel, a wired channel, an optical cable, and other transmission media. The processor 930 is responsible for managing the bus architecture and general processing, and the memory 99 can store data used by the processor 930 when performing operations.

Optionally, the processor 930 may be a CPU, an ASIC, a FPGA, or a CPLD. The processor may also adopt a multi-core architecture.

It should be noted here that the above apparatus 900 provided by the present disclosure can implement all the method steps implemented by the second device in the above method embodiments, and can achieve the same technical effects. The part of this embodiment which is the same as the method embodiments and the beneficial effects thereof will not be described in detail here.

FIG. 10 is a schematic structural diagram of yet another communication and sensing apparatus provided by an embodiment of the present disclosure. As shown in FIG. 10, the apparatus 1000 is applied to a first device, and the apparatus 1000 includes: a first transmission unit 1010, an acquisition unit 1020, and a second transmission unit 1030.

The first transmission unit 1010 is configured to transmit a first sensing signal using a first transmission parameter on a first time-domain resource.

The acquisition unit 1020 is configured to acquire a second transmission parameter, where the second transmission parameter is related to the first transmission parameter, and/or, the second transmission parameter is related to sensing data of a target object acquired based on the first sensing signal.

The second transmission unit 1030 is configured to transmit a second sensing signal using the second transmission parameter on a second time-domain resource, where both the first sensing signal and the second sensing signal are used for sensing the target object.

Optionally, the acquisition unit 1020 is specifically configured to receive indication information sent by a second device, where the indication information is used to indicate the second transmission parameter or the sensing data of the target object. The second transmission parameter is acquired according to the indication information.

Optionally, the first transmission parameter includes: a first sending parameter and/or a first receiving parameter, the second transmission parameter includes: a second sending parameter and/or a second receiving parameter, and the indication information includes: first indication information and/or second indication information. If the indication information is the first indication information, the first device is a sensing signal sending end, the second device is a sensing signal receiving end or a device other than the sensing signal sending end and the sensing signal receiving end, and the first indication information is used to determine the second sending parameter. If the indication information is the second indication information, the first device is a sensing signal receiving end, the second device is a sensing signal sending end or a device other than the sensing signal sending end and the sensing signal receiving end, and the second indication information is used to determine the second receiving parameter.

Optionally, the acquisition unit 1020 is specifically configured to receive the first indication information sent by the second device on a third time-domain resource. A start time of the third time-domain resource is equal to or later than an end time of the first time-domain resource, an end time of the third time-domain resource is earlier than or equal to a time obtained by subtracting T1 from a start time of the second time-domain resource, and T1 is greater than or equal to 0; and/or, receive the second indication information sent by the second device on a fourth time-domain resource, where a start time of the fourth time-domain resource is equal to or later than the end time of the first time-domain resource, an end time of the fourth time-domain resource is earlier than or equal to a time obtained by subtracting T2 from the start time of the second time-domain resource, and T2 is greater than or equal to 0.

Optionally, if the first indication information is not received on the third time-domain resource, the second sending parameter is the same as the first sending parameter; and/or, if the second indication information is not received on the fourth time-domain resource, the second receiving parameter is the same as the first receiving parameter.

Optionally, before receiving the indication information sent by the second device, the acquisition unit 1020 is further configured to acquire the sensing data of the target object according to the first sensing signal. The second transmission unit 1030 is further configured to send the sensing data to the second device.

Optionally, upon determining that the sensing data of the target object changes, the second transmission unit 1030 is further configured to send the sensing data to the second device.

It should be noted here that the apparatus 1000 provided by the present disclosure can implement all the method steps implemented by the first device in the above method embodiments, and can achieve the same technical effects. The part of this embodiment which is the same as the method embodiments and the beneficial effects thereof will not be described in detail here.

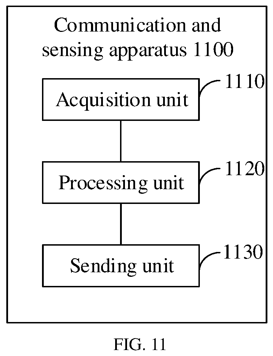

FIG. 11 is a schematic structural diagram of still another communication and sensing apparatus provided by an embodiment of the present disclosure. As shown in FIG. 11, the apparatus 1100 is applied to a second device, and the apparatus 1100 includes: an acquisition unit 1110, a processing unit 1120, and a sending unit 1130.

The acquisition unit 1110 is configured to acquire first sensing data of a target object.

The processing unit 1120 is configured to generate indication information according to the first sensing data of the target object, where the indication information is used to indicate a second transmission parameter or second sensing data of the target object, the second transmission parameter is used by a first device to transmit a second sensing signal on a second time-domain resource, and the second sensing signal is used for sensing the target object.

The sending unit 1130 is configured to send the indication information to the first device.

Optionally, the second transmission parameter includes: a second sending parameter and/or a second receiving parameter, and the indication information includes: first indication information and/or second indication information. If the indication information is the first indication information, the first device is a sensing signal sending end, the second device is a sensing signal receiving end or a device other than the sensing signal sending end and the sensing signal receiving end, and the first indication information is used to determine the second sending parameter. If the indication information is the second indication information, the first device is a sensing signal receiving end, the second device is a sensing signal sending end or a device other than the sensing signal sending end and the sensing signal receiving end, and the second indication information is used to determine the second receiving parameter.

Optionally, if the second device is the device other than the sensing signal sending end and the sensing signal receiving end, the acquisition unit 1110 is specifically configured to receive the first sensing data of the target object sent by the sensing signal receiving end.

The sending unit 1130 is specifically configured to send the indication information to the first device upon determining that the second sensing data of the target object or a change in the second sensing data of the target object is greater than or equal to a first threshold, or a change in the second transmission parameter is greater than or equal to a second threshold.

Optionally, the first sensing data of the target object is acquired based on a first sensing signal transmitted using a first transmission parameter on a first time-domain resource, the first sensing signal is used for sensing the target object; the first transmission parameter includes: a first sending parameter and/or a first receiving parameter.

It should be noted here that the apparatus 1100 provided by the disclosure can implement all the method steps implemented by the second device in the above method embodiments, and can achieve the same technical effects. The part of this embodiment which is the same as the method embodiments and the beneficial effects thereof will not be specifically described here.

It should be noted that a division of units in the embodiments of the present disclosure is schematic and is only a logical function division, and there may be other division methods in actual implementation. In addition, the functional units in various embodiments of the present disclosure may be integrated into one processing unit, or each unit may exist physically alone, or two or more units may be integrated into one unit. The above-mentioned integrated units may be implemented in a form of hardware, or may be implemented in a form of a software functional unit.

If implemented in the form of a software functional unit and sold or used as an independent product, the integrated unit may be stored in a processor-readable storage medium. Based on this understanding, a technical solution of the present disclosure essentially or a part thereof that contributes to the prior art or all or part of the technical solutions can be embodied in a form of a software product. The computer software product is stored in a storage medium and includes several instructions for making a computer device (which may be a personal computer, a server, or a network device, etc.) or a processor (processor) execute all or part of steps of the methods described in the embodiments of the present disclosure. The aforementioned storage medium includes: a USB flash disk, a mobile hard disk, a read-only memory (Read-Only Memory, ROM), a random access memory (Random Access Memory, RAM), a magnetic disk, an optical disk, or other media that can store program codes.

An embodiment of the present disclosure further provides a non-transitory readable storage medium. The non-transitory readable storage medium stores a computer program, and the computer program is used to cause a processor to execute method steps implemented by the first device in the above method embodiments.

An embodiment of the present disclosure further provides a non-transitory readable storage medium. The non-transitory readable storage medium stores a computer program, and the computer program is used to cause a processor to execute method steps implemented by the second device in the above method embodiments.

The non-transitory readable storage medium may be any available medium or data storage device that the processor can access, including but not limited to, a magnetic memory (such as a floppy disk, a hard disk, a magnetic tape, a magneto-optical disk (MO), etc.), an optical memory (such as a CD, a DVD, a BD, a HVD, etc.), and a semiconductor memory (such as a ROM, an EPROM, an EEPROM, a non-volatile memory (NAND FLASH), a solid state disk (SSD)), etc.

An embodiment of the present disclosure further provides a computer program product, including a computer program, and when the computer program is executed by a processor, method steps implemented by the first device in the above method embodiments are implemented.

An embodiment of the present disclosure further provides a computer program product, including a computer program, and when the computer program is executed by a processor, method steps implemented by the second device in the above method embodiments are implemented.

An embodiment of the present disclosure further provides a communication system, the communication system may include, for example, the first device and the second device as mentioned above to implement the above method embodiments.

It should be understood by those skilled in the art that embodiments of the present disclosure may be provided as methods, systems, or computer program products. Therefore, the present disclosure may take forms of entire-hardware embodiments, entire-software embodiments, or embodiments combining software and hardware aspects. Furthermore, the present disclosure may take a form of a computer program product implemented on one or more computer-usable storage media (including but not limited to, a magnetic disk memory, an optical memory, etc.) in which computer-usable program codes are included.

The present disclosure is described with reference to flowcharts and/or block diagrams of the methods, devices (systems), and computer program products according to the embodiments of the present disclosure. It should be understood that each flow and/or block in the flowcharts and/or block diagrams, and a combination of flows and/or blocks in the flowcharts and/or block diagrams may be implemented by computer-executable instructions. These computer-executable instructions may be provided to a processor of a general-purpose computer, a special-purpose computer, an embedded processor or other programmable data processing devices to produce a machine, so that an apparatus for implementing functions specified in one or more flows of the flowcharts and/or one or more blocks of the block diagrams is produced by instructions executed by the processor of the computer or other programmable data processing devices.

These processor-executable instructions may also be stored in a processor-readable memory that can guide a computer or other programmable data processing device to operate in a specific way, so that the instructions stored in the processor-readable memory produce a manufactured product including an instruction apparatus, and the instruction apparatus implements functions specified in one or more flows of the flowcharts and/or one or more blocks of the block diagrams.

These processor-executable instructions may also be loaded on a computer or other programmable data processing devices, so that a series of operational steps are executed on the computer or other programmable devices to produce computer-implemented processing, whereby instructions executed on the computer or other programmable devices provide steps for implementing functions specified in a one or more flows of the flowcharts and/or one or more blocks of the block diagrams.

Obviously, those skilled in the art can make various modifications and variations to the present disclosure without departing from the spirit and scope of the present disclosure. Thus, if these modifications and variations of the present disclosure are within the scope of the claims of the present disclosure and their equivalent technology, the present disclosure is also intended to include these modifications and variations.

## Claims

1. A communication and sensing method, **characterized in that** the method is applied to a first device, and the method comprises:
transmitting a first sensing signal using a first transmission parameter on a first time-domain resource;
acquiring a second transmission parameter, wherein the second transmission parameter is related to the first transmission parameter, and/or, the second transmission parameter is related to sensing data of a target object acquired based on the first sensing signal;
transmitting a second sensing signal using the second transmission parameter on a second time-domain resource, wherein both the first sensing signal and the second sensing signal are used for sensing the target object.

2. The method according to claim 1, wherein acquiring the second transmission parameter comprises:
receiving indication information sent by a second device, wherein the indication information is used to indicate the second transmission parameter or the sensing data of the target object;
acquiring the second transmission parameter according to the indication information.

3. The method according to claim 2, wherein the first transmission parameter comprises: a first sending parameter and/or a first receiving parameter, the second transmission parameter comprises: a second sending parameter and/or a second receiving parameter, and the indication information comprises: first indication information and/or second indication information;
if the indication information is the first indication information, the first device is a sensing signal sending end, the second device is a sensing signal receiving end or a device other than the sensing signal sending end and the sensing signal receiving end, and the first indication information is used to determine the second sending parameter;
if the indication information is the second indication information, the first device is a sensing signal receiving end, the second device is a sensing signal sending end or a device other than the sensing signal sending end and the sensing signal receiving end, and the second indication information is used to determine the second receiving parameter.

4. The method according to claim 3, wherein receiving the indication information sent by the second device comprises:
receiving the first indication information sent by the second device on a third time-domain resource, wherein a start time of the third time-domain resource is equal to or later than an end time of the first time-domain resource, an end time of the third time-domain resource is earlier than or equal to a time obtained by subtracting T1 from a start time of the second time-domain resource, and T1 is greater than or equal to 0;
and/or, receiving the second indication information sent by the second device on a fourth time-domain resource, wherein a start time of the fourth time-domain resource is equal to or later than the end time of the first time-domain resource, an end time of the fourth time-domain resource is earlier than or equal to a time obtained by subtracting T2 from the start time of the second time-domain resource, and T2 is greater than or equal to 0.

5. The method according to claim 4, wherein the method further comprises:
if the first indication information is not received on the third time-domain resource, the second sending parameter is the same as the first sending parameter;
and/or,
if the second indication information is not received on the fourth time-domain resource, the second receiving parameter is the same as the first receiving parameter.

6. The method according to any one of claims 2-5, wherein before receiving the indication information sent by the second device, the method further comprises:
acquiring the sensing data of the target object according to the first sensing signal;
sending the sensing data to the second device.

7. The method according to claim 6, wherein sending the sensing data to the second device comprises:
sending the sensing data to the second device upon determining that the sensing data of the target object changes.

8. A communication and sensing method, **characterized in that** the method is applied to a second device, and the method comprises:
acquiring first sensing data of a target object;
generating indication information according to the first sensing data of the target object, wherein the indication information is used to indicate a second transmission parameter or second sensing data of the target object, the second transmission parameter is used by a first device to transmit a second sensing signal on a second time-domain resource, and the second sensing signal is used for sensing the target object;
sending the indication information to the first device.

9. The method according to claim 8, wherein the second transmission parameter comprises: a second sending parameter and/or a second receiving parameter, and the indication information comprises: first indication information and/or second indication information;
if the indication information is the first indication information, the first device is a sensing signal sending end, the second device is a sensing signal receiving end or a device other than the sensing signal sending end and the sensing signal receiving end, and the first indication information is used to determine the second sending parameter;
if the indication information is the second indication information, the first device is a sensing signal receiving end, the second device is a sensing signal sending end or a device other than the sensing signal sending end and the sensing signal receiving end, and the second indication information is used to determine the second receiving parameter.

10. The method according to claim 9, wherein if the second device is the device other than the sensing signal sending end and the sensing signal receiving end, acquiring the first sensing data of the target object comprises:
receiving the first sensing data of the target object sent by the sensing signal receiving end.

11. The method according to any one of claims 8-10, wherein sending the indication information to the first device comprises:
sending the indication information to the first device upon determining that the second sensing data of the target object or a change in the second sensing data of the target object is greater than or equal to a first threshold, or a change in the second transmission parameter is greater than or equal to a second threshold.

12. The method according to claim 8, wherein the first sensing data of the target object is acquired based on a first sensing signal transmitted using a first transmission parameter on a first time-domain resource, and the first sensing signal is used for sensing the target object; the first transmission parameter comprises: a first sending parameter and/or a first receiving parameter.

13. A communication and sensing apparatus, **characterized in that** the apparatus is applied to a first device, and the apparatus comprises:
a first transmission unit, configured to transmit a first sensing signal using a first transmission parameter on a first time-domain resource;
an acquisition unit, configured to acquire a second transmission parameter, wherein the second transmission parameter is related to the first transmission parameter, and/or, the second transmission parameter is related to sensing data of a target object acquired based on the first sensing signal;
a second transmission unit, configured to transmit a second sensing signal using the second transmission parameter on a second time-domain resource, wherein both the first sensing signal and the second sensing signal are used for sensing the target object.

14. A communication and sensing apparatus, **characterized in that** the apparatus is applied to a second device, comprising:
an acquisition unit, configured to acquire first sensing data of a target object;
a processing unit, configured to generate indication information according to the first sensing data of the target object, wherein the indication information is used to indicate a second transmission parameter or second sensing data of the target object, the second transmission parameter is used by a first device to transmit a second sensing signal on a second time-domain resource, and the second sensing signal is used for sensing the target object;
a sending unit, configured to send the indication information to the first device.

15. A communication and sensing apparatus, **characterized in that** the apparatus is applied to a first device, and the apparatus comprises a memory, a transceiver, and a processor;
the memory is configured to store a computer program; the transceiver is configured to transceive data under control of the processor; the processor is configured to read the computer program in the memory and perform the following operations:
transmitting a first sensing signal using a first transmission parameter on a first time-domain resource;
acquiring a second transmission parameter, wherein the second transmission parameter is related to the first transmission parameter, and/or, the second transmission parameter is related to sensing data of a target object acquired based on the first sensing signal;
transmitting a second sensing signal using the second transmission parameter on a second time-domain resource, wherein both the first sensing signal and the second sensing signal are used for sensing the target object.

16. The apparatus according to claim 15, wherein the processor is specifically configured to perform the following operations:
receiving indication information sent by a second device, wherein the indication information is used to indicate the second transmission parameter or the sensing data of the target object;
acquiring the second transmission parameter according to the indication information.

17. The apparatus according to claim 16, wherein the first transmission parameter comprises: a first sending parameter and/or a first receiving parameter, the second transmission parameter comprises: a second sending parameter and/or a second receiving parameter, and the indication information comprises: first indication information and/or second indication information;
if the indication information is the first indication information, the first device is a sensing signal sending end, the second device is a sensing signal receiving end or a device other than the sensing signal sending end and the sensing signal receiving end, and the first indication information is used to determine the second sending parameter;
if the indication information is the second indication information, the first device is a sensing signal receiving end, the second device is a sensing signal sending end or a device other than the sensing signal sending end and the sensing signal receiving end, and the second indication information is used to determine the second receiving parameter.

18. The apparatus according to claim 17, wherein the processor is specifically configured to perform the following operations:
receiving the first indication information sent by the second device on a third time-domain resource, wherein a start time of the third time-domain resource is equal to or later than an end time of the first time-domain resource, an end time of the third time-domain resource is earlier than or equal to a time obtained by subtracting T1 from a start time of the second time-domain resource, and T1 is greater than or equal to 0;
and/or, receiving the second indication information sent by the second device on a fourth time-domain resource, wherein a start time of the fourth time-domain resource is equal to or later than the end time of the first time-domain resource, an end time of the fourth time-domain resource is earlier than or equal to a time obtained by subtracting T2 from the start time of the second time-domain resource, and T2 is greater than or equal to 0.

19. The apparatus according to claim 18, wherein the processor is further configured to perform the following operations:
if the first indication information is not received on the third time-domain resource, the second sending parameter is the same as the first sending parameter;
and/or,
if the second indication information is not received on the fourth time-domain resource, the second receiving parameter is the same as the first receiving parameter.

20. The apparatus according to any one of claims 16-19, wherein before receiving the indication information sent by the second device, the processor is further configured to perform the following operations:
acquiring the sensing data of the target object according to the first sensing signal;
sending the sensing data to the second device.

21. The apparatus according to claim 20, wherein the processor is specifically configured to perform the following operations:
sending the sensing data to the second device upon determining that the sensing data of the target object changes.

22. A communication and sensing apparatus, **characterized in that** the apparatus is applied to a second device, and the apparatus comprises a memory, a transceiver, and a processor:
the memory is configured to store a computer program; the transceiver is configured to transceive data under control of the processor; the processor is configured to read the computer program in the memory and perform the following operations:
acquiring first sensing data of a target object;
generating indication information according to the first sensing data of the target object, wherein the indication information is used to indicate a second transmission parameter or second sensing data of the target object, the second transmission parameter is used by a first device to transmit a second sensing signal on a second time-domain resource, and the second sensing signal is used for sensing the target object;
sending the indication information to the first device.

23. A non-transitory readable storage medium, **characterized in that** the non-transitory readable storage medium stores a computer program, and the computer program is used to cause a processor to execute the method according to any one of claims 1-7, or, to execute the method according to any one of claims 8-12.
